# EUROPÄISCHE PATENTSCHRIFT

(11) **EP 2 581 637 B1**
(45) Veröffentlichungstag und Bekanntmachung des Hinweises auf die Patenterteilung: **05.07.2017**
(21) Anmeldenummer: 12187753.4
(22) Anmeldetag: 09.10.2012
(51) Int. Cl.: F16L 45/00, F16L 55/115, F16L 55/11, F23J 13/08

(54) **Verschlussdeckel zum Verschließen einer Kontrollöffnung an einem Kunststoff-Abgasrohr, Abgasrohr und System mit einem Verschlussdeckel**
Closure cap for closing an inspection opening on a plastic waste gas pipe, exhaust pipe and system with a closure cap
Couvercle de fermeture destiné à fermer un orifice de contrôle sur un tuyau d'échappement en matière synthétique, tuyau d'échappement et système avec un couvercle de fermeture

(30) Priorität: 10.10.2011 DE 102011054341; 25.04.2012 DE 202012101545 U
(43) Veröffentlichungstag der Anmeldung: 17.04.2013
(73) Patentinhaber: Bächle, Dieter, 8597 Landschlacht (CH)
(72) Erfinder: Bächle, Dieter, 8597 Landschlacht (CH)
(74) Vertreter: Wagner, Kilian

(56) Entgegenhaltungen:
- WO-A1-02/08586
- WO-A1-95/30592
- CA-A- 577 310
- DE-A1- 19 519 073
- DE-U1- 20 105 317
- FR-A1- 2 851 786
- GB-A- 2 254 317

## Beschreibung

Die Erfindung betrifft einen Verschlussdeckel zum Verschließen einer Kontrollöffnung an einem Kunststoff-Abgasrohr nach dem Oberbegriff des Anspruchs 1. Ferner betrifft die Erfindung ein System unter Verwendung eines Abgasrohrs und eines erfindungsgemäßen Verschlussdeckels.

Ein Verschlussdeckel nach dem Oberbegriff des Anspruchs 1 ist aus der WO 95/30592 A1 bekannt. Der bekannt Verschlussdeckel dient insbesondere als Verschlussdeckel für einen Kraftstoffeinfüllstutzen in einem Fahrzeug. Der bekannte Verschlussdeckel weist hierzu zwei relativ zueinander verdrehbare Teile auf, die zum Befestigen an dem Kraftstoffstutzen eine Bajonettverbindung ausbilden. Die Bajonettverbindung wird durch Halterippen realisiert, die in den Querschnitt des Kraftstoffeinfüllstutzens eingreifen und innerhalb des Kraftstoffeinfüllstutzens sich mit diesem verriegeln lassen. Dadurch ist ein direkter Kontakt des in dem Kraftstoffeinfüllstutzen befindlichen Mediums und den als Haltemitteln für den Verschlussdeckel dienenden Halterippen möglich.

Aus der DE 195 19 073 A1 ist darüber hinaus ein Verschlussdeckel zum Verschließen einer Kontrollöffnung an einem Abgasrohr bekannt, bei dem eine Quetschdichtung zwischen zwei scheibenförmigen Elementen des Verschlussdeckels angeordnet ist, wobei die Befestigung bzw. das Verspannen des Verschlussdeckels mittels einer Flügelmutter erfolgt, die die Quetschdichtung radial gegen die Innenwand der Kontrollöffnung verspannt.

Aus der DE 201 05 317 U1 ist ein Verschlussdeckel bekannt, dessen Befestigung an einer Kontrollöffnung mittels eines Schraubgetriebes erfolgt.

Bei dem Verschlussdeckel gemäß der FR 2 851 786 A1, der ebenfalls keine Bajonettverbindung zeigt, wirkt dieser mit einer innerhalb des Querschnitts eines Behältnisses angeordneten Einsatzes zusammen.

Ein Verschlussdeckel bei Abgasanlagen dient dazu, das Abgasrohr im Bereich seiner Kontrollöffnung während des Normalbetriebs der Anlage dicht verschließen zu können. Zu Kontrollzwecken der Abgasanlage ist es jedoch erforderlich, den Verschlussdeckel von dem Abgasrohr entfernen bzw. abnehmen zu können, damit eine visuelle Kontrolle des Abgasrohres, oder aber das Einführen eines Messinstrumentes oder ähnlichem in das Abgasrohr ermöglicht werden kann. Besonders wichtig ist ein dichtes Verschließen des Abgasrohres an seiner Kontrollöffnung durch den Verschlussdeckel während des Normalbetriebs, auch bei einem relativ hohen Überdruck oder beim Auftreten von Druckspitzen, um damit den Austritt von Abgas aus der Kontrollöffnung zu vermeiden. Weiterhin soll der Verschlussdeckel auf möglichst einfache und gleichzeitig sichere Art und Weise mit dem Abgasrohr im Bereich seiner Kontrollöffnung verbunden werden, damit ein einfaches Handling erzielbar ist und Fehlmontagen ausgeschlossen werden können.

Aufgabe der Erfindung ist es, einen Verschlussdeckel zum Verschließen einer Kontrollöffnung an einem Kunststoff-Abgasrohr nach dem Oberbegriff des Anspruchs 1 derart auszubilden, dass dessen Dichtelement auch bei einer oftmaligen Demontage und Wiedermontage des Verschlussdeckels an der Kontrollöffnung stets eine zuverlässige Abdichtung ermöglicht und sich stets gut lösen bzw. montieren lässt.

Diese Aufgabe wird erfindungsgemäß bei einem Verschlussdeckel zum Verschließen einer Kontrollöffnung an einem Kunststoff-Abgasrohr mit den kennzeichnenden Merkmalen des Anspruchs 1 gelöst.

Vorteilhafte Weiterbildungen des erfindungsgemäßen Verschlussdeckels zum Verschließen einer Kontrollöffnung sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

Damit die Dichtwirkung des Verschlussdeckels allein durch das erste Teil erzeugt werden kann, wird darüber hinaus vorgeschlagen, dass das erste Teil einen wesentlichen kreisförmigen, geschlossenen Bodenbereich aufweist, der an seinem Umfang einen sich in axialer Richtung erstreckenden Wandbereich aufweist, und dass das Dichtelement im Bereich des Wandbereichs angeordnet ist.

Um einerseits eine relativ einfache Montage des Dichtelements im ersten Teil zu ermöglichen, und andererseits die Verwendung zusätzlicher Hilfsstoffe zu vermeiden, wird darüber hinaus bei letztgenannter Variante des Verschlussdeckels vorgeschlagen, dass das Dichtelement in einer ringförmigen Ausnehmung des Wandbereichs angeordnet und durch Klemmschluss gehalten ist.

Eine besonders gute Dichtwirkung des Dichtelements wird erzielt, wenn das Dichtelement mehrere, vorzugsweise zwei oder drei radial umlaufende und axial zueinander beabstandete Dichtlippen aufweist, die an einem ringförmigen Basisabschnitt des Dichtelements angeformt sind. Dadurch wird selbst bei einer etwaigen Beschädigung einer Dichtlippe stets eine einwandfreie Funktion des Dichtelements erzielt, da in diesem Fall die anderen Dichtlippen die Dichtfunktion übernehmen.

In alternativer Ausgestaltung des Dichtelements ist es vorgesehen, dass dieses als (einfacher) O-Ring ausgebildet ist. Ein derartiger O-Ring hat gegenüber dem zuletzt beschriebenen Dichtelement den Vorteil einer besonders kostengünstigen Herstellung bei ausreichender Dichtwirkung. Problematisch bei der Verwendung von O-Ringen bei herkömmlichen Systemen ist insbesondere das Wiederlösen des Verschlussdeckels bzw. des O-Rings von seiner Anlagefläche am Abgasrohr. Dies ist beim Stand der Technik deshalb problematisch, weil aufgrund von Verharzungen der O-Ring mit der Zeit mit dem Abgasrohr bzw. dessen stutzenförmigen Bereich verklebt und dadurch ein Wiederlösen des Abgasdeckels vom stutzenförmigen Bereich erschwert ist. Dieses Problem lässt sich in einem erfindungsgemäßen Verschlussdeckel unter Verwendung eines (konventionellen) O-Rings dadurch vermeiden, dass der stutzenförmige Bereich des Abgasrohrs, wie später noch näher erläutert, eine schräge Anlagefläche aufweist, an der der O-Ring mit seiner Außenfläche bzw. mit seinem Außenumfang anliegt. Dadurch lässt sich die erhöhte Abzugskraft des Verschlussdeckels beim Auftreten von Verharzungen zwischen dem O-Ring und der Anlagefläche des stutzenförmigen Bereichs drastisch reduzieren, da der O-Ring nach einem minimalen Anheben von seiner Anlagefläche bereits außer Anlagekontakt mit der Anlagefläche ist und dadurch der Kontakt zwischen dem O-Ring und den Verharzungen relativ einfach aufgebrochen werden kann. Ein weiterer Vorteil dieser Lösung bei Verwendung eines O-Rings ist es, dass auf zusätzliche mechanische Lösehilfseinrichtungen, die ein Lösen des Verschlussdeckels vom stutzenförmigen Bereich des Abgasrohrs ermöglichen, verzichtet werden kann, so dass sowohl der Verschlussdeckel, als auch der stutzenförmige Bereich des Abgasrohrs aufgrund des Verzichts auf eine derartige Hilfseinrichtung besonders einfach hergestellt werden können.

Um den Verschlussdeckel mechanisch stabil zu gestalten, um damit diesen auch beim Auftreten von relativ hohen Druckspitzen nicht zu beschädigen und gleichzeitig eine möglichst geringe Wanddicke für den Verschlussdeckel (bzw. das erste Teil) zu ermöglichen, wird darüber hinaus vorgeschlagen, dass der Bodenbereich des ersten Teils gewölbt ausgebildet ist.

Zur Ausbildung einer mechanisch einfachen und leicht montierbaren Verbindung zwischen den beiden Teilen ist es darüber hinaus in einer weiteren Ausgestaltung der Erfindung vorgesehen, dass vom Bodenbereich des ersten Teils in Richtung zum zweiten Teil hin ragende Rastmittel zum axialen Festsetzen des ersten Teils zum zweiten Teil vorgesehen sind. Dadurch sind die beiden Teile des Verschlussdeckels unverlierbar miteinander verbunden.

Ganz besonders bevorzugt ist eine konstruktive Ausgestaltung der Rastmittel, bei der diese einen Rashaken umfassen, der eine Ausnehmung im zweiten Teil hintergreift.

Eine einfache, und zugleich mechanisch robuste Ausbildung der Verbindung der beiden Teile wird ermöglicht, wenn mehrere, vorzugsweise in gleich großen Winkelabständen zueinander angeordnete Rasthaken vorgesehen sind, und wenn die Ausnehmung im zweiten Teil kreisförmig ausgebildet ist. Dadurch wird zum einen selbst beim Ausfall bzw. beim Abbrechen eines Rasthakens eine zuverlässige Verbindung zwischen den beiden Teilen ermöglicht, und zum anderen wird die zur mechanischen Entkopplung der beiden Teile erforderliche Drehbarkeit zwischen den beiden Teilen auf einfache Art und Weise sichergestellt.

In weiterer Ausgestaltung der Erfindung ist es vorgesehen, dass das erste Teil eine Ausricht- und/oder Fixierhilfe, vorzugsweise in Form einer Markierung wie einer Erhebung, Beschriftung, Ausklinkung o.ä. aufweist, mit der das erste Teil in einer definierten Winkelposition zu dem stutzenförmigen Bereich ausrichtbar und/oder fixierbar ist. Dadurch lässt sich im Zusammenhang mit einer beispielsweise mit der Ausklinkung zusammenwirkenden Erhebung am stutzenförmigen Bereich ausschließen, dass sich das Dichtelement nach dem axialen Einsetzen in die Kontrollöffnung während dem sich daran anschließenden Fixieren des Verschlussdeckels über das zweite Teil in der Kontrollöffnung dreht, so dass Vor- oder Beschädigungen durch eine Relativbewegung bzw. ein Reiben des Dichtelements an der Innenseite der Kontrollöffnung vermeiden werden. Doch selbst wenn am stutzenförmigen Bereich kein entsprechendes Gegenelement vorgesehen ist, kann mittels einer derartigen Ausrichthilfe auf einfache Art und Weise eine definierte Montageposition des ersten Teils einem Bediener vorgegeben werden.

Um eine mechanische Beschädigung bei der Montage und/oder Demontage des Verschlussdeckels durch zu hohe Momente zu vermeiden, kann es weiterhin vorgesehen sein, dass das zweite Teil wenigstens ein Anschlagelement, vorzugsweise in Form eines an dem zweiten Teil angeformten Fortsatzes o.ä. aufweist, der mit einem am ersten Teil angeordneten Gegenelement zusammenwirkt, und mit dem der Verdrehbereich des zweiten Teils zum ersten Teil begrenzbar ist.

Darüber hinaus lässt sich, insbesondere bei ungünstigen Bedingungen, die Montage bzw. Demontage für einen Bediener erleichtern, wenn am zweiten Teil des Verschlussdeckels wenigstens ein Griffbereich zur Montage bzw. Demontage des zweiten Teils angeformt ist, wobei der wenigstens eine Griffbereich vorzugsweise eine Riffelung o.ä. zur Reibungserhöhung aufweist.

Um einen universellen Verschlussdeckel auszubilden, der auch zur ständigen Aufnahme eines Messinstrumentes o.ä. dienen kann, ist es in einer weiteren Variante vorgesehen, dass an dem zweiten Teil auf einer Seite des Bodens eine Aufnahme für ein Messinstrument o.ä. angeformt ist, und dass auf der anderen Seite des Bodens in Ausrichtung mit der Aufnahme eine Ausrichthilfe für ein Werkzeug in Form einer Vertiefung o.ä. ausgebildet ist. Ein derartiger Verschlussdeckel lässt sich von einem Bediener somit leicht zur Aufnahme eines Messinstrumentes nutzen, ohne dass er einen anderen bzw. neuen Verschlussdeckel benötigt. Hierzu ist es lediglich erforderlich, dass er die Ausrichthilfe, zum Beispiel in Form einer Vertiefung, nutzt, um diese zur Orientierung für eine Bohrer zu verwenden, so dass eine in Ausrichtung mit der Aufnahme ausgebildete Durchgangsbohrung geschaffen werden kann, durch die das Messinstrument o.ä. hindurchragen kann.

Zusätzlich umfasst die Erfindung auch ein System zum Verschließen einer Kontrollöffnung an einem Kunststoffabgasrohr mit einem erfindungsgemäßen Verschlussdeckel und einem Abgasrohr. Ein derartiges System ermöglicht es, ein Verschlussdeckel auf einfache Art und Weise an einem Kunststoff Abgasrohr zu befestigen bzw. den Verschlussdeckel von dem Kunststoff-Abgasrohr zu entfernen.

In einer besonders bevorzugten Ausgestaltung ist es vorgesehen, dass an einer dem Verschlussdeckel zugewandten Stirnseite eine Erhebung vorgesehen ist, die dazu geeignet ist, in eine am ersten Teil des Verschlussdeckels ausgebildete Ausnehmung einzugreifen. Eine derartige Erhebung ist insbesondere dafür vorgesehen, einem Anwender die Position des Verschlussdeckels zu verdeutlichen, in der der Verschlussdeckel an dem stutzenförmigen Bereich des Abgasrohrs montiert werden kann. In dieser Position ist sichergestellt, dass insbesondere die Haltearme des Verschlussdeckels nicht in Kontakt mit den Vorsprüngen am stutzenförmigen Bereich sind, die mit den Haltearmen den Verschluss (Bajonett-Verschluss) ausbilden.

In weiterer Ausgestaltung der Erfindung ist es vorgesehen, dass an dem stutzenförmigen Bereich des Abgasrohrs wenigstens eine Löserippe angeformt ist, die mit wenigstens einem Abschnitt am zweiten Teil des Verschlussdeckels zusammenwirkt, um diesen bei der Demontage beim Drehen des zweiten Teils axial in Richtung aus dem stutzenförmigen Bereich zu bewegen. Eine derartige Hilfseinrichtung ermöglicht es insbesondere, beim Auftreten von Verklebungen bzw. Verharzungen zwischen dem Dichtelement und dem stutzenförmigen Bereich des Abgasrohrs eine in der Löserichtung wirkende Axialkraft zu erzeugen, wobei diese Axialkraft insbesondere in Ausrichtung mit der Längsachse des Verschlussdeckels ausgebildet ist und somit das Dichtelement über den Umfang gleichmäßig belastet und ein Verkanten vermeidet.

Eine weitere bevorzugte Ausgestaltung, die insbesondere für den Fall vorgesehen ist, dass das Dichtelement als O-Ring ausgebildet ist, sieht vor, dass stutzenförmige Bereich an einer Innenwand eine radial umlaufende, in Bezug zur Längsachse des stutzenförmigen Bereichs unter einem Winkel angeordnete Anlagefläche für den O-Ring aufweist. Bei einer derartigen Ausbildung kann optional insbesondere beim Auftreten von Verharzungen zwischen dem O-Ring und dem stutzenförmigen Bereich auf zusätzliche Löseeinrichtungen verzichtet werden, da sich der O-Ring bereits beim Aufbringen relativ geringer Axialkräfte bei der Demontage von der Anlagefläche des stutzenförmigen Bereichs lösen lässt.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Längsschnitt durch ein Abgasrohr mit einer Kontrollöffnung unter Verwendung eines ersten erfindungsgemäßen Verschlussdeckels,
- Fig. 2: einen Querschnitt durch das Abgasrohr gemäß Fig. 1 im Befestigungsbereich des Verschlussdeckels,
- Fig. 3: eine perspektivische Außenansicht auf das Abgasrohr gemäß der Fig. 1 und 2,
- Fig. 4: ein weiteres, gegenüber der Fig. 1 modifiziertes Abgasrohr im Längsschnitt,
- Fig. 5: ein Detail der Fig. 1 im Befestigungsbereich des Verschlussdeckels mit einem stutzenförmigen Bereich des Abgasrohrs,
- Fig. 6: einen erfindungsgemäßen Verschlussdeckel in einer Schnittdarstellung,
- Fig. 7: ein Detail des Verschlussdeckels gemäß Fig. 6 im Bereich des Dichtelements,
- Fig. 8: eine perspektivische Ansicht auf den Verschlussdeckel gemäß Fig. 6,
- Fig. 9: eine perspektivische Ansicht auf einen Kontrollstutzen zur Verwendung mit einem erfindungsgemäßen Verschlussdeckel,
- Fig. 10: einen zweiten erfindungsgemäßen Verschlussdeckel in Draufsicht,
- Fig. 11: einen Schnitt in der Ebene XI-XI der Fig. 10,
- Fig. 12: eine perspektivische Ansicht auf einen an einem Abgasrohr montierten, modifizierten Verschlussdeckel,
- Fig. 13: einen Schnitt durch den am Abgasrohr befestigten Verschlussdeckel gemäß Fig. 12,
- Fig. 14: ein Detail der Fig. 13 in vergrößerter Darstellung zur Verdeutlichung der Anordnung eines O-Rings im Abgasrohr und
- Fig. 15: eine Draufsicht auf den montierten Verschlussdeckel am Abgasrohr gemäß Fig. 13.

Gleiche Bauteile bzw. Bauteile mit gleicher Funktion sind in den Figuren mit den gleichen Bezugsziffern versehen.

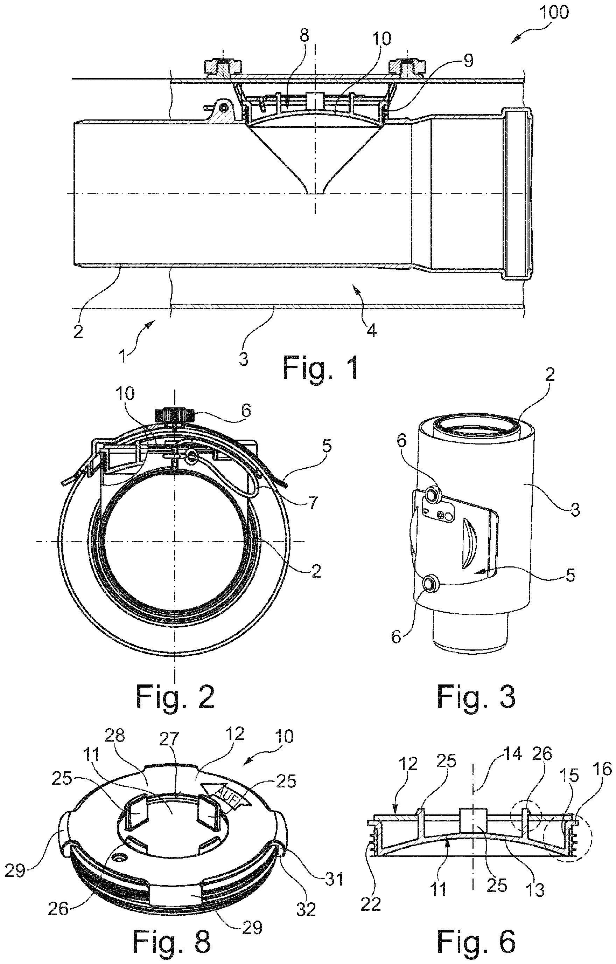

In der Fig. 1 ist ein System 100, bestehend aus einem aus Kunststoff bestehenden Abgasrohr 1 und einem erfindungsgemäßen Verschlussdeckel 10 dargestellt. Das Abgasrohr 1 besteht aus einem die Abgase führenden Innenrohr 2, das konzentrisch von einem Außenrohr 3 umgeben ist. In dem zwischen dem Innenrohr 2 und dem Außenrohr 3 ausgebildeten Ringspalt 4 kann insbesondere Frischluft einer Heizungsanlage zugeführt werden, deren Abgase, wie bereits erläutert, über das Innenrohr 2 des Abgasrohrs 1 ausgeleitet werden.

Das Außenrohr 3 kann, wie insbesondere anhand der Fig. 3 erkennbar ist, mittels einer Revisionsklappe 5 verschlossen werden, wobei die Revisionsklappe 5 beispielsweise mittels Schraubverschlüssen 6 an dem Außenrohr 3 befestigt ist, so dass nach Abnahme der Revisionsklappe 5 ein Zugang zum Verschlussdeckel 10 ermöglicht wird. Der Verschlussdeckel 10 kann beispielsweise mittels eines Sicherungsseils 7, das einerseits am Verschlussdeckel 10 und andererseits am Innenrohr 2 befestigt ist, gegen Verlieren gesichert sein (s. Fig. 2).

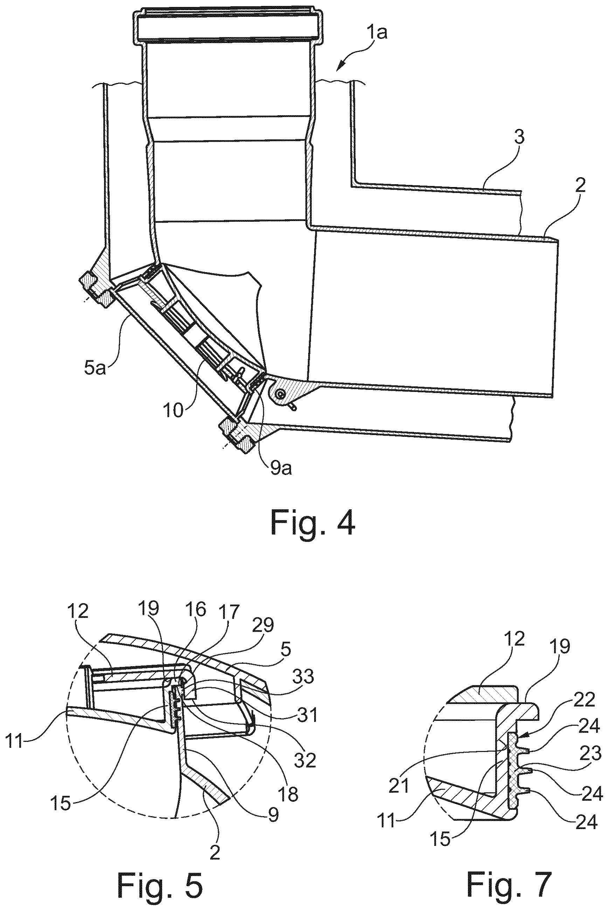

Wie am besten anhand einer Zusammenschau der Fig. 5 bis 8 erkennbar ist, besteht der Verschlussdeckel 10 aus zwei Teilen 11 und 12. Das erste Teil 11 dient der eigentlichen Abdichtung einer im Querschnitt runden Öffnung 8, die durch einen stutzenförmigen Bereich 9 am Innenrohr 2 des Abgasrohrs 1 ausgebildet wird. Das erste Teil 11 ist rotationssymmetrisch ausgebildet und weist einen kreisförmigen, vorzugsweise gewölbt ausgebildeten Bodenbereich 13 auf, der umfangsseitig in einen sich parallel zur Längsachse 14 des Verschlussdeckels 11 in Richtung zum zweiten Teil 12 erstreckenden Wandbereich 15 übergeht. Der Wandbereich 15 weist auf der dem zweiten Teil 12 zugewandten Seite einen radial umlaufenden, flanschartig nach außen ragenden Randbereich 16 auf. Die Unterseite 17 des Randbereichs 16 bildet bei in dem Innenrohr 2 befestigten ersten Teil 11 einen Axialanschlag für das erste Teil 11 in Richtung des Innenrohrs 2 aus, derart, dass entsprechend der Fig. 5 die Unterseite 17 des Randbereichs 16 auf der Stirnfläche 18 des stutzenförmigen Bereichs 9 anliegt. Demgegenüber bildet die Oberseite 19 des Randbereichs 16 eine Auf- bzw. Anlagefläche für das zweite Teil 12 des Verschlussdeckels 10 aus.

Der als Spritzgussteil ausgebildete Verschlussdeckel 10 weist in seinem Wandbereich 15 des ersten Teils 11 eine radial umlaufende Aufnahmenut 21 für ein Dichtelement 22 auf. Wie am besten anhand der Fig. 7 erkennbar ist, weist das insbesondere aus Gummi bestehende Dichtelement 22 einen ringförmigen Basisabschnitt 23 auf, von dem sich drei radial umlaufende Dichtlippen 24 erstrecken, die in Längsrichtung des ersten Teils 11 beabstandet zueinander angeordnet sind. Die Befestigung des Dichtelements 22 in der Aufnahmenut 21 des ersten Teils 11 erfolgt bevorzugt durch einen Klemmschluss, derart, dass der Durchmesser des (elastischen) Dichtelements 22 aufgeweitet werden muss, damit das Dichtelement 22 in die Aufnahmenut 21 eingebracht werden kann, wobei im Endzustand das Dichtelement 22 am Grund der Aufnahmenut 1 aufgrund der elastischen Vorspannkraft dichtend anliegt. Wichtig ist auch, dass der Außendurchmesser des Dichtelements 22 im Bereich seiner Dichtlippen 24 wenigstens dem Innenrohrdurchmesser des stutzenförmigen Bereichs 9 in dem abzudichtenden Bereich entspricht, so dass die Dichtlippen 24 in der axialen Endposition des Verschlussdeckels 10 bzw. des ersten Teils 1 innerhalb des stutzenförmigen Bereichs 9 dichtend an der Innenwand des stutzenförmigen Bereich 9 anliegen.

Parallel zum Wandbereich 15 des ersten Teils 11 erstrecken sich in Richtung zum zweiten Teil 12 beispielhaft vier, in gleichmäßigen Winkelabständen zueinander angeordnete Haltearme 25 von der Oberseite des Bodenbereichs 13. Die Haltearme 25 weisen radial nach außen gerichtete Rasthaken 26 auf, wobei die Haltearme 25 auf einem Teilkreisdurchmesser des ersten Teils 11 angeordnet sind.

Die Haltearme 25 bzw. die Rasthaken 26 hintergreifen eine kreisförmige Aussparung 27 im zweiten Teil 12 des Verschlussdeckels 10 derart, dass beim gegeneinander bewegen der beiden Teile 11, 12 die Rasthaken 26 einen ringförmigen Bereich 28 des zweiten Teils 12 hintergreifen und mit diesem verrasten. Die Länge der Haltearme 25 bzw. der Anordnung der Rasthaken 26 ist dabei bevorzugt derart, dass in dem mit dem zweiten Teil 12 verrasteten Zustand des ersten Teils 11 der ringförmige Bereich 28, wie insbesondere anhand der Fig. 7 erkennbar ist, an der Oberseite 19 des Randbereichs 16 anliegt.

Das zweite Teil 12 weist beispielhaft vier, radial nach außen ragende Haltearme 29 auf, die mit einem in Richtung zum ersten Teil 11 angeordneten parallelen Abschnitt 31 und einem radial nach innen vom parallelen Abschnitt 31 sich erstreckenden Haltebereich 32 den Randbereich 16 des ersten Teils 11 mit radialem Spiel umgreifen. Die in Umfangsrichtung eben oder schräg angeordneten Haltebereiche 32 wirken mit am Außenumfang des stutzenförmigen Bereichs 9 des Innenrohrs 2 angeordneten Vorsprüngen 33 zusammen, derart, dass beim Verdrehen des zweiten Teils 12 zum stutzenförmigen Bereich 9 die Haltebereiche 32 des zweiten Teils 12 in Wirkverbindung mit den Vorsprüngen 33 des stutzenförmigen Bereichs 9 gelangen und dabei in Art einer Bajonettverbindung das zweite Teil 12 axial mit dem stutzenförmigen Bereich 9 des Abgasrohrs 1 form- und kraftschlüssig verbinden, was durch eine entsprechende Formgebung der Haltebereiche 32 und/oder der Vorsprünge 33 erzielt wird.

Der Montageprozess eines Verschlussdeckels 10 zum Verschließen der Öffnung 8 am Abgasrohr 1 geschieht wie folgt: Zunächst werden die beiden Teile 11, 12 gegeneinander bewegt, derart, dass das erste Teil 11 mit dem zweiten Teil 12 mittels der Rasthaken 26 verrastet. Dadurch ist das zweite Teil 12 zum ersten Teil 11 axial unverlierbar gesichert. Anschließend kann der aus dem ersten Teil 11 und dem zweiten Teil 12 bestehende Verschlussdeckel 10 mit seinem ersten Teil 11 in die Öffnung 8 des stutzenförmigen Bereichs 9 eingeführt werden, bis die Unterseite 17 des Randbereichs 16 in Anlagekontakt mit der Stirnfläche 18 des stutzenförmigen Bereichs 9 gelangt und somit eine weitere Axialbewegung des ersten Teils 11 verhindert. Anschließend wird das zweite Teil 12 mit dessen Haltebereichen 32 in Wirkverbindung mit den Vorsprüngen 33 des stutzenförmigen Bereichs 9 gebracht. Wesentlich dabei ist, dass durch die Anordnung und Ausbildung der beiden Teile 11, 12 eine Verdrehbarkeit der beiden Teile 11, 12 um deren Längsachse zueinander gewährleistet ist, so dass beim Verdrehen des zweiten Teils 12 das erste Teil 11 in vorteilhafter Weise innerhalb der Öffnung 8 ortsfest verbleibt, d.h., dass es sich beim Verschrauben des zweiten Teils 12 nicht mitdreht.

Die Erfindung bzw. die Verwendung des Verschlussdeckels 10 ist nicht auf geradlinig ausgebildete Abgasrohre 1 beschränkt. Hierzu wird beispielhaft auf die Fig. 4 verwiesen, bei der ein gekrümmtes Abgasrohr 1 a dargestellt ist, wobei die Revisionsöffnung 5a bzw. der Verschlussdeckel 10 im Bogenbereich des Abgasrohrs 1 a angeordnet ist. Die Ausbildung des Verschlussdeckels 10 bei dem Abgasrohr 1 a bzw. des stutzenförmigen Bereichs 9a entspricht jedoch grundsätzlich der Ausbildung des Abgasrohrs 1 bzw. des stutzenförmigen Bereichs 9.

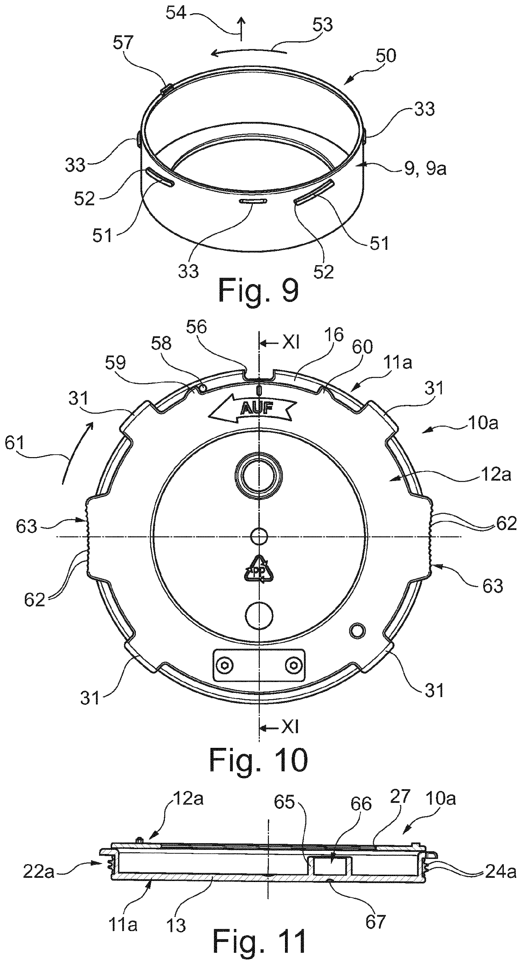

In der Fig. 9 ist ein Kontrollstutzen 50 dargestellt, wie er als Einsetzteil in ein (nicht dargestelltes) Abgasrohr 1, 1 a oder einen Rohrbogen o.ä. dienen kann oder integraler Bestandteil eines der genannten Elemente ist. Der Kontrollstutzen 50 weist den Bereich 9, 9a zur Aufnahme des Verschlussdeckels 10 oder eines modifizierten Verschlussdeckels 10a auf. Der Kontrollstutzen 50 hat an seinem Außenumfang, neben den Vorsprüngen 33, schräg angeordnete, geradlinig oder gekrümmt ausgebildete Löserippen 51. Hierbei kann jedem Vorsprung 33 eine Löserippe 51 zugeordnet sein, wobei die Löserippen 51 zu den Vorsprüngen 33 um einen gewissen Winkel versetzt angeordnet sind, um ein axiales Einführen der Abschnitte 31 und der Haltebereiche 32 zwischen den Vorsprüngen 33 und den Löserippen 51 zu ermöglichen. Die den Vorsprüngen 33 zugewandten Enden 52 der Löserippen 52 sind in Bezug auf die Längsachse des Kontrollstutzens 50 etwas unterhalb der Vorsprünge 33 angeordnet, so dass bei der Demontage des Verschlussdeckels 10, 10a bei einer Drehung des Verschlussdeckels 10, 10a in Richtung des Pfeils 53 die Haltebereiche 32 des zweiten Teils 12 auf die Oberseiten der Löserippen 52 auflaufen und durch deren Form bzw. schräge Orientierung am Außenumfang des Kontrollstutzens 50 eine in Richtung des Pfeils 54 wirkende Lösekraft auf den Verschlussdeckel 10, 10a erzeugt wird.

Der in den Fig. 10 und 11 dargestellte modifizierte Verschlussdeckel 10a weist am Randbereich 16 des ersten Teils 11a eine rechteckförmige Ausnehmung in Form einer Ausklinkung 56 auf, die mit einer an der Oberseite des Kontrollstutzens 50 bzw. des Bereichs 9 ausgebildeten Erhebung 57 (Fig. 9) zusammenwirkt. Dadurch kann der Verschlussdeckel 10a mit dem ersten Teil 11a auf dem Kontrollstutzen 50 nur dann eben aufgelegt werden, wenn die Erhebung 57 in die Ausklinkung 56 eingreift. Die Erhebung 57 und die Ausklinkung 56 bewirken somit, dass der Verschlussdeckel 10a nur in einer bestimmten Winkellage auf den Kontrollstutzen 50 bzw. zum Bereich 9 aufgesetzt werden kann. Außerdem wird bewirkt, dass sich das erste Teil 11a, insbesondere während der nachfolgenden weiteren Montage des Verschlussdeckels 10a, nicht mehr in seiner Drehachse drehen lässt.

Weiterhin ist auf der Oberseite des ersten Teils 11a ein Anschlagstift 58 angeformt, der mit zwei am zweiten Teil 12a angeformten Anschlagrippen 59, 60 zusammenwirkt. Bei der Montage des Verschlussdeckels 10a lässt sich somit das zweite Teil 12a relativ zum ersten Teil 11 a in Richtung des Pfeils 61 nur soweit drehen, bis die Anschlagrippe 59 an dem Anschlagstift 58 anliegt. Eine Bewegung des Verschlussdeckels 10a entgegen der Richtung des Pfeils 61 ist nur bis zur Anlage der Anschlagrippe 60 am Anschlagstift 58 möglich. Insgesamt wird somit der Verdrehbereich des ersten Teils 11 a am zweiten Teil 12a begrenzt.

Zur Verbesserung des Handlings bei der Montage bzw. Demontage des Verschlussdeckels 10a weist dieser auf gegenüberliegenden Seiten am zweiten Teil 12a mit Riffelungen 62 versehene Griffbereiche 63 auf, die von der Hand eines Bedieners benutzt werden können, um die entsprechenden Kräfte bzw. Momente auf den Verschlussdeckel 10a schlupffrei übertragen zu können.

Aus der Fig. 11 ist auch ersichtlich, dass das Dichtelement 22a, im Gegensatz zum Dichtelement 22, lediglich zwei Dichtlippen 24a aufweist. Zuletzt erkennt mit auf der dem Bereich 9 bzw. dem Kontrollstutzen 50 abgewandten Seite des Bodens 13 am ersten Teil 11a eine als Führungshilfe bzw. Aufnahme für ein nicht dargestelltes Messinstrument o.ä. dienende, hülsenförmige Erhebung 65 mit einer im Ausführungsbeispiel zylindrischen Aufnahme 66. Die Aufnahme 66 ist im ersten Teil 11a auf einem Teilkreisdurchmesser angeordnet, der kleiner ist als der Durchmesser der Aussparung 27 im zweiten Teil 12a, sodass bei montiertem Verschlussdeckel 10a ein Zugang zur Aufnahme 66 ermöglicht wird. Um die Funktion der Aufnahme 66 zu nutzen, muss die Wand des ersten Teils 11a im Bereich der Aufnahme 66 durchbohrt werden. Hierzu ist, als Markierung bzw. Montagehilfe, auf der der Erhebung 65 gegenüberliegenden Seite des ersten Teils 11 a eine Vertiefung 67 für einen Bohrer o.ä. ausgebildet.

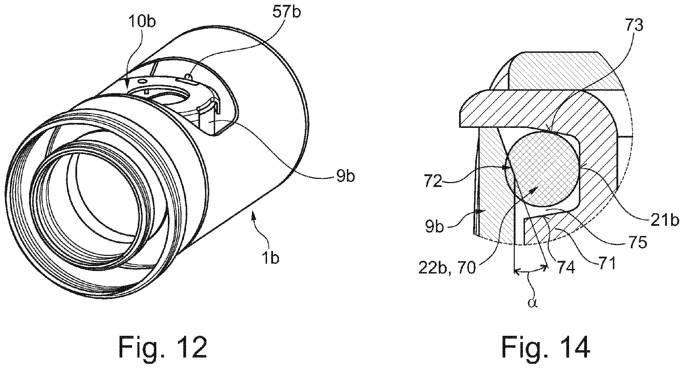

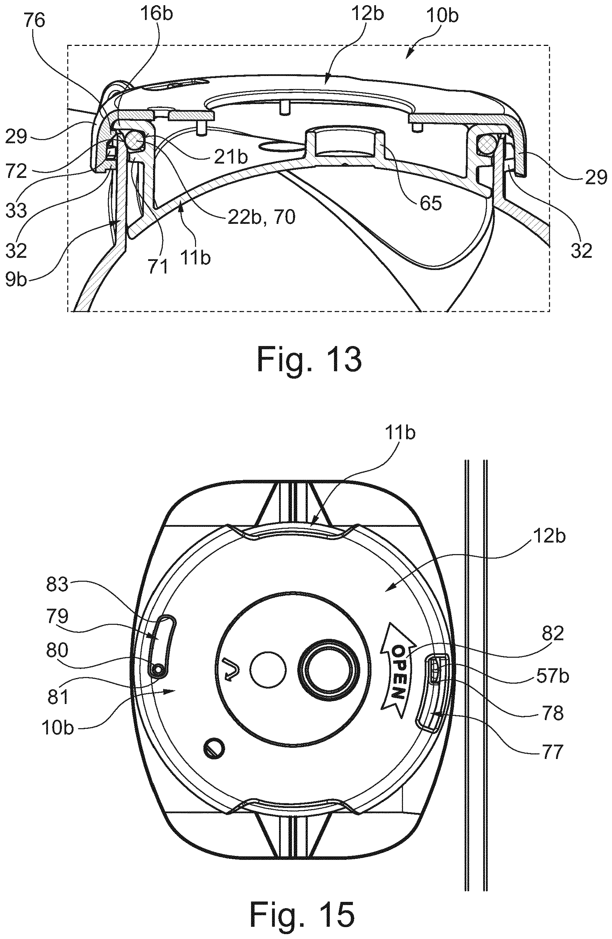

In den Fig. 12 bis 15 ist ein weiterer, modifizierter Verschlussdeckel 10b dargestellt. Der Verschlussdeckel 10b unterscheidet sich von den Verschlussdeckeln 10a und 10b dadurch, dass als Dichtelement 22b ein O-Ring 70 verwendet wird. Wie insbesondere anhand der Fig. 13 und 14 erkennbar ist, ist der O-Ring 70 in der Aufnahmenut 21 b vorzugsweise unter radialer Vorspannung aufgenommen, wobei der Außendurchmesser des O-Rings 70 etwas größer ist als der unterhalb des O-Rings 70 angeordnete Wandabschnitt 71 des ersten Teils 11 b. Wesentlich ist, dass der O-Ring 70 in dem Zustand, in dem der Verschlussdeckel 10b mit dem Abgasrohr 1 b bzw. dem stutzenförmigen Bereich 9b verbunden ist, in Wirkverbindung mit einer am stutzenförmigen Bereich 9b ausgebildeten Anlagefläche 72 kommt. Diese Anlagefläche 72 ist an der Innenwand des stutzenförmigen Bereichs 9b als radial umlaufende Fase ausgebildet und weist einen Winkel α gegenüber der Längsachse 14 des stutzenförmigen Bereichs 9b auf, der im Bereich zwischen 15° und 25°, insbesondere 18° beträgt. Wie ferner anhand der Fig. 14 erkennbar ist, weist die Aufnahmenut 21 b für den O-Ring 70 eine obere Anschlagsfläche 73 und eine untere Anschlagfläche 74 auf, die gegenüber der Horizontalen schräg angeordnet sind und eine keilartige Führung bzw. Aufnahme für den O-Ring 70 ausbilden. Weiterhin erkennt man, dass zwischen dem O-Ring 70 und der unteren Anschlagfläche 74 im eingebauten Zustand des Verschlussdeckels 10b ein Axialspalt 75 ausgebildet ist.

Wie anhand der Fig. 13 erkennbar ist, weist der stutzenförmige Bereich 9b des Abgasrohrs 1b an seiner Außenseite zwar die Vorsprünge 33 auf, jedoch, in Abänderung zur Fig. 9, keine Löserippen 51. Die Vorsprünge 33 wirken mit den Haltearmen 29 bzw. den an den Haltearmen 29 ausgebildeten Haltebereichen 32 zusammen. Insbesondere erkennt man an der Fig. 13 noch, dass an der Innenseite der Haltearme 29 mehrere, vorzugsweise in gleich großen Winkelabschnitten zueinander angeordnete Rasthaken 76 ausgebildet sind, die den Randbereich 16b des ersten Teils 11 b des Verschlussdeckels 10b übergreifen und dadurch eine Rastverbindung zwischen den beiden Teilen 11 b, 12b ausbilden, über die das erste Teil 11 b axial zum zweiten Teil 12b positioniert ist.

Anhand der Fig. 15 ist erkennbar, dass auf der dem Verschlussdeckel 10b zugewandten Oberseite bzw. Stirnfläche 18 des stutzenförmigen Bereichs 9b eine Erhebung 57b ausgebildet ist, die einen im zweiten Teil 12b ausgebildeten ersten Schlitz 77 durchsetzt. Der erste Schlitz 77 ist auf einem Teilkreisdurchmesser des zweiten Teils 12b angeordnet und weist einen Drehwinkelbereich von beispielsweise zwischen 10° und 20° auf. Ferner erkennt man noch, dass die Erhebung 57b eine Ausnehmung in Form eines Durchbruchs 78 des ersten Teils 11 b durchsetzt, wobei die Größe des Durchbruchs 78 der Größe der Erhebung 57b angepasst ist, derart, dass zur Montage des Verschlussdeckels 10b auf dem stutzenförmigen Bereich 9b der Verschlussdeckel 10b nur in einer definierten Montageposition befestigt werden kann, bei dem die Erhebung 57b im Bereich des Durchbruchs 78 angeordnet ist und diese durchsetzt.

Auf der dem ersten Schlitz 77 gegenüberliegenden Seite weist das zweite Teil 12b eine Aussparung in Form eines zweiten Schlitzes 79 auf, der den gleichen Drehwinkelbereich aufweist wie der erste Schlitz 77. Ferner erkennt man einen von der Oberseite des ersten Teils 11 b in Richtung zum zweiten Teil 12b ragenden Anschlagstift 80, der im Bereich des zweiten Schlitzes 79 angeordnet ist und diesen durchsetzt. In der in der Fig. 15 dargestellten Stellung des Verschlussdeckels 10b auf dem stutzenförmigen Bereich 9b ist der Verschlussdeckel 10b mit dem stutzenförmigen 9b fest verbunden. Dabei gelangt der Anschlagstift 80 in Anlagekontakt mit der einen Begrenzung 81 des zweiten Schlitzes 79. In dieser Position sind auch die Haltearme 29 mit den Vorsprüngen 33 am stutzenförmigen Bereich 9b in Wirkverbindung angeordnet. Zum Lösen des Verschlussdeckels 10b von dem stutzenförmigen Bereich 9b des Abgasrohrs 1 b muss der Verschlussdeckel 10b in Richtung des Pfeils 82 verdreht werden, bis der Anschlagstift 81 mit der gegenüberliegenden Begrenzung 83 des zweiten Schlitzes 79 in Kontakt gerät. In dieser Position des Verschlussdeckels 10b befinden sich die Haltearme 29 bzw. die Haltebereiche 32 außer Kontakt mit den Vorsprüngen 33 am stutzenförmigen Bereich 9b, so dass der Verschlussdeckel 10b axial aus dem stutzenförmigen Bereich 9b herausgezogen werden kann.

Der soweit beschriebene erfindungsgemäße Verschlussdeckel 10, 10a, 10b kann in vielfältiger Art und Weise abgewandelt bzw. modifiziert werden, ohne vom Erfindungsgedanken abzuweichen. Insbesondere können alle im Zusammenhang mit dem Kontrollstutzen 50 erläuterten Merkmale direkt auf den stutzenförmigen Bereich 9, 9b des Innenrohrs 2 am Abgasrohr 1, 1 a, 1 b übertragen werden. Darüber hinaus wird erwähnt, dass bei dem Verschlussdeckel 10a keine Rasthaken 28 wie beim Verschlussdeckel 10 vorgesehen sind. Die beiden Teile 11a, 12a sind somit, im Gegensatz zum Verschlussdeckel 10, nicht unverlierbar zueinander angeordnet. Selbstverständlich kann jedoch auch der Verschlussdeckel 10a entsprechende Rasthaken 28 aufweisen.

### Bezugszeichenliste

- 1, 1a,1b: Abgasrohr
- 2: Innenrohr
- 3: Außenrohr
- 4: Ringspalt
- 5, 5a: Revisionsklappe
- 6: Schraubverschluss
- 7: Sicherungsseil
- 8: Öffnung
- 9, 9a,9b: Bereich

- 10, 10a,10b: Verschlussdeckel
- 11, 11a,11b: erstes Teil
- 12, 12a,12b: zweites Teil
- 13: Bodenbereich
- 14: Längsachse
- 15: Wandbereich
- 16,16b: Randbereich
- 17: Unterseite
- 18: Stirnfläche
- 19: Oberseite
- 21,21 b: Aufnahmenut
- 22, 22a,22b: Dichtelement
- 23: Basisabschnitt
- 24, 24a: Dichtlippe
- 25: Haltearm
- 26: Rasthaken
- 27: Aussparung
- 28: ringförmiger Bereich
- 29: Haltearm
- 31: Abschnitt
- 32: Haltebereich
- 33: Vorsprung

- 50: Kontrollstutzen
- 51: Löserippe
- 52: Ende
- 53, 54: Pfeil
- 56: Ausklinkung
- 57,57b: Erhebung
- 58: Anschlagstift
- 59,60: Anschlagrippe
- 61: Pfeil
- 62: Riffelung
- 63: Griffbereich
- 65: Erhebung
- 66: Aufnahme
- 67: Vertiefung

- 70: O-Ring
- 71: Wandabschnitt
- 72: Anlagefläche
- 73: obere Anschlagfläche
- 74: untere Anschlagfläche
- 75: Axialspalt
- 76: Rasthaken
- 77: erster Schlitz
- 78: Durchbruch
- 79: zweiter Schlitz
- 80: Anschlagstift
- 81: Begrenzung
- 82: Pfeil
- 83: Begrenzung

- 100: System

## Patentansprüche

1. Verschlussdeckel (10; 10a; 10b) zum Verschließen einer Kontrollöffnung (8) an einem Kunststoff-Abgasrohr (1; 1 a; 1 b), mit einem aus elastischem Material bestehenden Dichtelement (22; 22a; 22b) zum Abdichten eines stutzenförmigen Bereichs (9; 9a; 9b) des Kunststoff-Abgasrohrs (1; 1a; 1b), wobei der Verschlussdeckel (10; 10a; 10b) eine form- und/oder kraftschlüssige Verbindung zum Verbinden mit dem stutzenförmigen Bereich (9; 9a; 9b) aufweist, wobei der Verschlussdeckel (10; 10a; 10b) aus wenigstens zwei Teilen (11; 11a; 11b, 12; 12a; 12b) besteht, wobei das erste Teil (11; 11a; 11b) das Dichtelement (22; 22a; 22b) trägt und axial in die Öffnung (8) des stutzenförmigen Bereichs (9; 9a; 9b) einführbar ist, wobei das zweite Teil (12; 12a; 12b) Mittel zum Ausbilden der Verbindung mit dem stutzenförmigen Bereich (9; 9a; 9b) aufweist, wobei die beiden Teile (11; 11a; 11b, 12; 12a; 12b) um deren Längsachse (14) zueinander drehbar angeordnet sind, wobei die Mittel zum Ausbilden der Verbindung zum stutzenförmigen Bereich (9; 9a; 9b) am zweiten Teil (12; 12a; 12b) wenigstens einen Abschnitt (31) umfassen, der sich in axialer Richtung parallel zum ersten Teil (11; 11 a; 11 b) erstreckt und einen Haltebereich (32) aufweist, der dazu geeignet ist, einen am stutzenförmigen Bereich (9; 9a; 9b) ausgebildeten Vorsprung (33) zu hintergreifen und einen Teil einer Bajonettverbindung ausbildet, und wobei das erste Teil (11; 11a; 11 b) ein axiales Anschlagelement, vorzugsweise in Form eines radial umlaufenden Flansches (16), zum axialen Positionieren des ersten Teils (11; 11a; 11b) in der Öffnung (8) des stutzenförmigen Bereichs (9; 9a; 9b) aufweist,
**dadurch gekennzeichnet,**
**dass** das zweite Teil (12; 12a; 12b) mindestens einen radial nach außen ragenden Haltearm (29) aufweist, der mit dem Abschnitt (31) und dem vom Abschnitt (31) sich radial nach innen erstreckenden Haltebereich (32) den Randbereich (16) des ersten Teils (11; 11a; 11 b) mit radialem Spiel umgreift.

2. Verschlussdeckel nach Anspruch 1,
**dadurch gekennzeichnet,**
**dass** das erste Teil (11; 11a; 11b) einen im Wesentlichen kreisförmigen, geschlossenen Bodenbereich (13) aufweist, der an seinem Umfang einen sich in axialer Richtung erstreckenden, radial umlaufenden Wandbereich (15) aufweist, und dass das Dichtelement (22; 22a; 22b) im Bereich des Wandbereichs (15) angeordnet ist.

3. Verschlussdeckel nach Anspruch 2,
**dadurch gekennzeichnet,**
**dass** das Dichtelement (22; 22a; 22b) in einer ringnutförmigen Ausnehmung (21; 21b) des Wandbereichs (15) angeordnet und in der Ausnehmung (21; 21 b) durch Klemmschluss gehalten ist.

4. Verschlussdeckel nach Anspruch 3,
**dadurch gekennzeichnet,**
**dass** das Dichtelement (22; 22a) mehrere, vorzugsweise zwei oder drei, radial umlaufende und axial zueinander beabstandete Dichtlippen (24; 24a) aufweist, die an einem ringförmigen Basisabschnitt (23) des Dichtelements (22; 22a) angeformt sind.

5. Verschlussdeckel nach Anspruch 3,
**dadurch gekennzeichnet,**
**dass** das Dichtelement (22b) als O-Ring (70) ausgebildet ist und einen dem stutzenförmigen Bereich (9b) zugewandten, radial umlaufenden Wandabschnitt (71) der Ausnehmung (21b) radial überragt.

6. Verschlussdeckel nach einem der Ansprüche 2 bis 5,
**dadurch gekennzeichnet,**
**dass** der Bodenbereich (13) des ersten Teils (11; 11a; 11b) gewölbt ausgebildet ist.

7. Verschlussdeckel nach einem der Ansprüche 2 bis 6,
**dadurch gekennzeichnet,**
**dass** die beiden Teile (11; 11b, 12; 12b) zum axialen Verbinden eine Rastverbindung aufweisen, die wenigstens einen Rasthaken (26; 76) umfasst.

8. Verschlussdeckel nach einem der Ansprüche 1 bis 7,
**dadurch gekennzeichnet,**
**dass** das erste Teil (11a; 11b) eine Ausricht- und/oder Fixierhilfe, vorzugsweise in Form einer Markierung, Erhebung, Beschriftung oder Ausnehmung (56; 78) aufweist, mit der das erste Teil (11a; 11 b) in einer definierten Winkelposition zu dem stutzenförmigen Bereich (9; 9b) ausrichtbar und/oder fixierbar ist.

9. Verschlussdeckel nach einem der Ansprüche 1 bis 8,
**dadurch gekennzeichnet,**
**dass** das zweite Teil (12a; 12b) wenigstens ein Anschlagelement in Form eines an dem zweiten Teil (12a; 12b) angeformten Fortsatzes (59, 60) oder in Form einer am zweiten Teil (12a; 12b) angeformten Aussparung (79) aufweist, mit dem der Verdrehbereich des zweiten Teils (12a; 12b) mittels eines am ersten Teil (11a; 11 b) angeordneten, mit dem Fortsatz (59, 60) bzw. der Aussparung (79) zusammenwirkenden Elements (58; 80) begrenzbar ist.

10. Verschlussdeckel nach einem der Ansprüche 1 bis 9,
**dadurch gekennzeichnet,**
**dass** am zweiten Teil (12a) wenigstens ein Griffbereich (63) zur Montage bzw. Demontage des zweiten Teils (12a) angeformt ist, wobei der wenigstens eine Griffbereich (63) vorzugsweise eine Riffelung (62) zur Reibungserhöhung aufweist.

11. Verschlussdeckel nach einem der Ansprüche 1 bis 10,
**dadurch gekennzeichnet,**
**dass** an dem zweiten Teil (12a) auf einer Seite des Bodens (13) eine Aufnahme (66) beispielsweise für ein Messinstrument angeformt ist, und dass auf der anderen Seite des Bodens (13) in Ausrichtung mit der Aufnahme (66) eine Führungshilfe für ein Werkzeug, vorzugsweise in Form einer Vertiefung (67) ausgebildet ist.

12. System (100) zum Verschließen einer Kontrollöffnung an einem Kunststoff-Abgasrohr (1; 1a; 1b), umfassend einen Verschlussdeckel (10; 10a; 10b) nach einem der Ansprüche 1 bis 11 sowie ein Abgasrohr (1; 1 a; 1 b) mit einem stutzenförmigen Bereich (9; 9a; 9b) zum Befestigen des Verschlussdeckels (10; 10a; 10b).

13. System nach Anspruch 12,
**dadurch gekennzeichnet,**
**dass** an dem stutzenförmigen Bereich (9; 9a; 9b) am Außenumfang Vorsprünge (33) vorgesehen sind, die dazu ausgebildet sind, mit dem Haltebereich (32) des Verschlussdeckels (10; 10a; 10b) zusammenzuwirken.

14. System nach Anspruch 12 oder 13,
**dadurch gekennzeichnet,**
**dass** an einer dem Verschlussdeckel (10a; 10b) zugewandten Stirnseite eine Erhebung (57; 57b) vorgesehen ist, die dazu geeignet ist, in eine am ersten Teil (11a; 11 b) des Verschlussdeckels (10a; 10b) ausgebildete Ausnehmung (56; 79) einzugreifen.

15. System nach einem der Ansprüche 12 bis 14,
**dadurch gekennzeichnet,**
**dass** am stutzenförmigen Bereich (9a; 9b) wenigstens eine Löserippe (51) angeformt ist, die mit wenigstens einem Abschnitt (31) am zweiten Teil (12a; 12b) des Verschlussdeckels (10a; 10b) zusammenwirkt, um diesen bei der Demontage beim Drehen des zweiten Teils (12a; 12b) axial in Richtung aus dem stutzenförmigen Bereich (9a; 9b) zu bewegen.

16. System nach einem der Ansprüche 12 bis 14,
**dadurch gekennzeichnet,**
**dass** der stutzenförmige Bereich (9b) an einer Innenwand eine radial umlaufende, in Bezug zur Längsachse (14) des stutzenförmigen Bereichs (9b) unter einem Winkel (α) angeordnete Anlagefläche (72) für ein als O-Ring (70) ausgebildetes Dichtelement (22b) des Verschlussdeckels (10b) aufweist.

## Claims

1. Locking cap (10; 10a; 10b) for locking an inspection opening (8) on a plastic exhaust pipe (1; 1a; 1b), with a sealing element (22; 22a; 22b) consisting of an elastic material for sealing a port-shaped region (9; 9a; 9b) of the plastic exhaust pipe (1; 1a; 1b), the locking cap (10; 10a; 10b) having a form-fit and/or force-fit connection for connection with the port-shaped region (9; 9a; 9b), the locking cap (10; 10a; 10b) consisting of at least two parts (11; 11 a; 11 b, 12; 12a; 12b), the first part (11; 11 a; 11b) carrying the sealing element (22; 22a; 22b) and being axially insertable into the opening (8) of the port-shaped region (9; 9a; 9b), the second part (12; 12a; 12b) comprising means for forming the connection with the port-shaped region (9; 9a; 9b), the two parts (11; 11a; 11b, 12; 12a; 12b) being arranged around their longitudinal axis (14) rotatable relative to one another, the means for forming the connection with the port-shaped region (9; 9a; 9b) comprising at least one section (31) on the second part (12; 12a; 12b) that extends parallel to the first part (11; 11a; 11b) in the axial direction and comprises a holding region (32), which is suitable for engaging behind a projection (33) formed on the port-shaped region (9; 9a; 9b) and forms part of a bayonet joint, and the first part (11; 11 a; 11 b) comprising an axial stop element, preferably in the form of a radially circumferential flange (16), for axially positioning the first part (11; 11a; 11b) in the opening (8) of the port-shaped region (9; 9a; 9b),
**characterized in that**
the second part (12; 12a; 12b) comprises at least one holding arm (29) radially projecting outward, which encompasses the edge region (16) of the first part (11; 11a; 11b) with radial clearance together with the section (31) and the holding region (32) extending radially inward from the section (31).

2. Locking cap according to claim 1,
**characterized in that**
the first part (11; 11 a; 11b) comprises a substantially circular closed bottom region (13), which comprises a radially circumferential wall region (15) extending in the axial direction, and **in that** the sealing element (22; 22a; 22b) is arranged in the region of the wall region (15).

3. Locking cap according to claim 2,
**characterized in that**
the sealing element (22; 22a; 22b) is arranged in an annular-groove-shaped recess (21; 21 b) of the wall region (15) and is held in the recess (21; 21b) by a clamp-fit.

4. Locking cap according to claim 3,
**characterized in that**
the sealing element (22; 22a) comprises multiple, preferably two or three, radially circumferential and axially spaced sealing lips (24; 24a), which are formed on an annular base section (23) of the sealing element (22; 22a).

5. Locking cap according to claim 3,
**characterized in that**
the sealing element (22b) is formed as an O-ring (70) and projects radially from a radially circumferential wall section (71) of the recess (21 b) facing the port-shaped region (9b).

6. Locking cap according to one of claims 2 to 5,
**characterized in that**
the bottom region (13) of the first part (11; 11a; 11 b) is formed to be domed.

7. Locking cap according to one of claims 2 to 6,
**characterized in that**
the two parts (11;11b, 12; 12b) for axially connecting comprise a latch connection, which includes at least one latch (26; 76).

8. Locking cap according to one of claims 1 to 7,
**characterized in that**
the first part (11a; 11 b) comprises an alignment and/or fixation help, preferably in the form of a mark, elevation, label or recess (56; 78), by means of which the first part (11 a; 11 b) can be aligned and/or fixed in a defined angular position in relation to the port-shaped region (9; 9b).

9. Locking cap according to one of claims 1 to 8,
**characterized in that**
the second part (12a; 12b) comprises at least one stop element in the form of an extension (59, 60) formed on the second part (12a; 12b) or in the form of a recess (79) formed on the second part (12a; 12b), by means of which the rotation region of the second part (12a; 12b) can be limited using an element (58; 80) arranged on the first part (11a; 11b) and cooperating with the extension (59, 60) or the recess (79), respectively.

10. Locking cap according to one of claims 1 to 9,
**characterized in that**
at least one handle region (63) for mounting or dismounting the second part (12a) is formed on the second part (12a), wherein the at least one handle region (63) preferably comprises a ribbing (62) for increasing friction.

11. Locking cap according to one of claims 1 to 10,
**characterized in that**
a reception (66) for a measuring instrument, for example, is formed on the second part (12a) on one side of the bottom (13), and **in that** a guiding help for a tool, preferably in the form of a depression (67), is formed on the other side of the bottom (13) aligned with the reception (66).

12. System (100) for locking an inspection opening on a plastic exhaust pipe (1; 1 a; 1 b), including a locking cap (10; 10a; 10b) according to one of claims 1 to 11 as well as an exhaust pipe (1; 1 a; 1 b) having a port-shaped region (9; 9a; 9b) for fastening the locking cap (10; 10a; 10b).

13. System according to claim 12,
**characterized in that**
projections (33) are provided on the port-shaped region (9; 9a; 9b) on the outer periphery, which are configured to cooperate with the holding region (32) of the locking cap (10; 10a; 10b).

14. System according to claim 12 or 13,
**characterized in that**
an elevation (57; 57b) is provided on a front face facing the locking cap (10a; 10b), which is suitable to engage with recess (56; 79) formed on the first part (11 a; 11 b) of the locking cap (110a; 10b).

15. System according to claim 12 to 14,
**characterized in that**
at least one detachment fin (51) is formed on the port-shaped region (9a; 9b), which cooperates with at least one section (31) on the second part (12a; 12b) of the locking cap (10a; 10b), to move the cap axially in direction out of the port-shaped region (9a; 9b) when rotating the second part (12a; 12b) during the dismounting process.

16. System according to claim 12 to 14,
**characterized in that**
the port-shaped region (9b) comprises a radially circumferential resting surface (72) arranged under an angle (α) relative to the longitudinal axis (14) of the port-shaped region (9b) on an inner wall for a sealing element (22b) of the locking cap (10b) formed as a O-ring (70).

## Revendications

1. Couvercle de fermeture (10 ; 10a ; 10b) pour la fermeture d'une ouverture de contrôle (8) au niveau d'un tuyau d'échappement en plastique (1 ; 1a ; 1b), comprenant un élément d'étanchéité (22 ; 22a ; 22b) constitué d'un matériau élastique, pour l'étanchéité d'une région en forme de tubulure (9 ; 9a ; 9b) du tuyau d'échappement en plastique (1 ; 1a ; 1b), le couvercle de fermeture (10 ; 10a ; 10b) présentant une connexion par engagement par correspondance de formes et/ou par force pour la connexion à la région en forme de tubulure (9 ; 9a ; 9b), le couvercle de fermeture (10 ; 10a ; 10b) se composant d'au moins deux parties (11 ; 11a ; 11b, 12 ; 12a ; 12b), la première partie (11 ; 11a ; 11b) portant l'élément d'étanchéité (22 ; 22a ; 22b) et pouvant être introduit axialement dans l'ouverture (8) de la région en forme de tubulure (9 ; 9a ; 9b), la deuxième partie (12 ; 12a ; 12b) présentant des moyens pour réaliser la connexion à la région en forme de tubulure (9 ; 9a ; 9b), les deux parties (11 ; 11a ; 11b, 12 ; 12a ; 12b) étant disposées de manière à pouvoir tourner l'une par rapport à l'autre autour de leur axe longitudinal (14), les moyens pour réaliser la connexion à la région en forme de tubulure (9 ; 9a ; 9b) au niveau de la deuxième partie (12 ; 12a ; 12b) comprenant au moins une portion (31) qui s'étend dans la direction axiale parallèlement à la première partie (11 ; 11a ; 11b) et qui présente une région de retenue (32) qui est apte à venir en prise par l'arrière avec une saillie (33) réalisée au niveau de la région en forme de tubulure (9 ; 9a ; 9b) et qui constitue une partie d'une connexion à baïonnette, et la première partie (11 ; 11a ; 11b) présentant un élément de butée axial, de préférence sous la forme d'une bride radialement périphérique (16), pour le positionnement axial de la première partie (11 ; 11a ; 11b) dans l'ouverture (8) de la région en forme de tubulure (9 ; 9a ; 9b),
**caractérisé en ce que**
la deuxième partie (12 ; 12a ; 12b) présente au moins un bras de retenue (29) faisant saillie radialement vers l'extérieur, qui vient en prise avec un jeu radial avec la portion (31) et la région de retenue (32) s'étendant radialement vers l'intérieur autour de la région de bord (16) de la première partie (11 ; 11a ; 11b).

2. Couvercle de fermeture selon la revendication 1, **caractérisé en ce que**
la première partie (11 ; 11a ; 11b) présente une région de fond fermée (13), essentiellement en forme de cercle, qui présente au niveau de sa périphérie une région de paroi (15) radialement périphérique, s' étendant dans la direction axiale, et **en ce que** l'élément d'étanchéité (22 ; 22a ; 22b) est disposé dans la région de la région de paroi (15).

3. Couvercle de fermeture selon la revendication 2, **caractérisé en ce que**
l'élément d'étanchéité (22 ; 22a ; 22b) est disposé dans un évidement en forme de rainure annulaire (21 ; 21b) de la région de paroi (15) et est retenu par engagement par serrage dans l'évidement (21 ; 21b).

4. Couvercle de fermeture selon la revendication 3, **caractérisé en ce que**
l'élément d'étanchéité (22 ; 22a) présente plusieurs, de préférence deux ou trois lèvres d'étanchéité (24 ; 24a) disposées radialement sur la périphérie et espacées axialement les unes des autres, qui sont façonnées sur une portion de base de forme annulaire (23) de l'élément d'étanchéité (22 ; 22a).

5. Couvercle de fermeture selon la revendication 3, **caractérisé en ce que**
l'élément d'étanchéité (22b) est réalisé sous forme de joint torique (70) et fait saillie radialement au-delà d'une portion de paroi radialement périphérique (71) de l'évidement (21b), tournée vers la région en forme de tubulure (9b).

6. Couvercle de fermeture selon l'une quelconque des revendications 2 à 5,
**caractérisé en ce que**
la région de fond (13) de la première partie (11 ; 11a ; 11b) est réalisée sous forme cintrée.

7. Couvercle de fermeture selon l'une quelconque des revendications 2 à 6,
**caractérisé en ce que**
les deux parties (11 ; 11b, 12 ; 12b) présentent, pour la connexion axiale, une connexion par encliquetage qui comprend au moins un crochet d'encliquetage (26 ; 76).

8. Couvercle de fermeture selon l'une quelconque des revendications 1 à 7,
**caractérisé en ce que**
la première partie (11a ; 11b) présente un auxiliaire d'orientation et/ou de fixation, de préférence sous la forme d'un marquage, d'un rechaussement, d'une inscription ou d'un évidement (56 ; 78), avec lequel la première partie (11a ; 11b) peut être orientée et/ou fixée dans une position angulaire définie par rapport à la région en forme de tubulure (9 ; 9b).

9. Couvercle de fermeture selon l'une quelconque des revendications 1 à 8,
**caractérisé en ce que**
la deuxième partie (12a ; 12b) présente au moins un élément de butée sous la forme d'une saillie (59, 60) façonnée sur la deuxième partie (12a ; 12b) ou sous la forme d' un évidement (79) façonné sur la deuxième partie (12a ; 12b), avec lequel la région de rotation de la deuxième partie (12a ; 12b) peut être limitée au moyen d'un élément (58 ; 80) disposé sur la première partie (11a ; 11b) et coopérant avec la saillie (59, 60) ou l'évidement (79).

10. Couvercle de fermeture selon l'une quelconque des revendications 1 à 9,
**caractérisé en ce**
**qu'**au moins une région de préhension (63) pour le montage ou le démontage de la deuxième partie (12a) est façonnée au niveau de la deuxième partie (12a), l'au moins une région de préhension (63) présentant de préférence un rainurage (62) pour augmenter les frottements.

11. Couvercle de fermeture selon l'une quelconque des revendications 1 à 10,
**caractérisé en ce**
**qu'**un logement (66), par exemple pour un instrument de mesure, est façonné au niveau de la deuxième partie (12a) sur un côté du fond (13), et **en ce que** de l'autre côté du fond (13), en alignement avec le logement (66), est réalisée un auxiliaire de guidage pour un outil, de préférence sous la forme d'un renfoncement (67).

12. Système (100) pour fermer une ouverture de contrôle au niveau d'un tuyau d'échappement en plastique (1 ; ; 1a ; 1b) comprenant un couvercle de fermeture (10 ; 10a ; 10b) selon l'une quelconque des revendications 1 à 11, ainsi qu'un tuyau d'échappement (1 ; 1a ; 1b) avec une région en forme de tubulure (9 ; 9a ; 9b) pour la fixation du couvercle de fermeture (10 ; 10a ; 10b).

13. Système selon la revendication 12,
**caractérisé en ce que**
des saillies (33) sont prévues au niveau de la région en forme de tubulure (9 ; 9a ; 9b) sur la périphérie extérieure, lesquelles sont prévues pour coopérer avec la région de retenue (32) du couvercle de fermeture (10 ; 10a ; 10b).

14. Système selon la revendication 12 ou 13, **caractérisé en ce**
**qu'**un rehaussement (57 ; 57b) est prévu au niveau d'un côté frontal tourné vers le couvercle de fermeture (10a ; 10b), lequel est apte à venir en prise dans un évidement (56 ; 79) réalisé au niveau de la première partie (11a ; 11b) du couvercle de fermeture (10a ; 10b).

15. Système selon l'une quelconque des revendications 12 à 14,
**caractérisé en ce**
**qu'**au moins une nervure de desserrage (51) est façonnée sur la région en forme de tubulure (9a ; 9b), laquelle coopère avec au moins une portion (31) au niveau de la deuxième partie (12a ; 12b) du couvercle de fermeture (10a ; 10b), afin de déplacer celui-ci axialement dans la direction depuis la région en forme de tubulure (9a ; 9b) lors du démontage pendant la rotation de la deuxième partie (12a ; 12b).

16. Système selon l'une quelconque des revendications 12 à 14,
**caractérisé en ce que**
la région en forme de tubulure (9b) présente, au niveau d'une paroi interne, une surface d'appui (72) pour un élément d'étanchéité (22b) du couvercle de fermeture (10b) réalisé sous forme de joint torique (70), disposée suivant un angle (α) par rapport à l'axe longitudinal (14) de la région en forme de tubulure (9b).
